# EUROPÄISCHE PATENTSCHRIFT

(11) **EP 0 504 736 B1**
(45) Veröffentlichungstag und Bekanntmachung des Hinweises auf die Patenterteilung: **19.01.1994**
(21) Anmeldenummer: 92104241.2
(22) Anmeldetag: 12.03.1992
(51) Int. Cl.: F16L 5/02, H02G 3/22

(54) **Halter zur Kabeldurchführung**
Retainer element for cables through an opening
Elément de support pour câbles qui traversent une ouverture

(30) Priorität: 21.03.1991 DE 4109206
(43) Veröffentlichungstag der Anmeldung: 23.09.1992
(73) Patentinhaber: A. Raymond & Cie, F-38028 Grenoble-Cédex (FR)
(72) Erfinder: Moretti, Erminio, F-38000 Grenoble (FR)
(74) Vertreter: Kirchgaesser, Johannes, Dipl.-Ing.

(56) Entgegenhaltungen:
- FR-A- 1 221 728
- US-A- 2 528 180

## Beschreibung

Die Erfindung betrifft gemäß dem Oberbegriff des Anspruchs 1 einen Halter zur abgedichteten Durchführung von Kabeln, Schläuchen oder dergleichen Leitungen durch Trennwände zwischen verschiedenen Bereichen eines Kraftfahrzeugs, insbesondere zwischen Fahrerkabine und Motorraum.

Die Erfindung geht hierbei aus von der DE 35 44 785 A1. Diese Druckschrift zeigt ein Abdichtungssystem für Leitungen, das aufgebaut ist aus einem Aufnahmekörper und einem aus zwei Halbschalen gebildeten Haltekörper, wobei die Halbschalen den Aufnahmekörper im geschlossenen Zustand fest zusammendrücken. Der Haltekörper weist an seiner der Trennwand zugewandten Stirnseite Befestigungslaschen auf mit Rasthaken an ihren äußeren Enden. Mit diesen Rasthaken werden die Befestigungslaschen in der hierfür vorgesehenen Aussparung in der Trennwand festgehalten. Die Abdichtung zwischen dem Haltekörper und der Trennwand übernimmt ein Dichtring, der in einer stirnseitig umlaufenden Ringnut der Halteschalen liegt.

Dieses Abdichtungssystem wird im Kraftfahrzeugbau verwendet für die Durchführung von Kabelbäumen, Bremsleitungen oder als Steckverbindung von Zündleitungen und kann von einer Seite der Trennwand montiert werden. Nachteilig ist hierbei, daß die Halbschalen zunächst um den mit Kabeln gefüllten Aufnahmekörper gelegt und geschlossen werden müssen, bevor die ganze Abdichtungseinheit mit den Befestigungslaschen in der Aussparung der Trennwand verankert werden kann.

Die im Aufnahmekörper fest eingespannten Kabel oder Schläuche lassen sich dann nicht mehr ohne weiteres axial verschieben und können somit das Verankern des Haltekörpers in der Trennwand behindern.

Von daher ergibt sich als Aufgabe der Erfindung, den gesamten Halter mit seinem Aufnahmekörper so zu gestalten, daß eine schnelle und problemlose Montage der Kabeldurchführung von einer Seite möglich ist.

Der zur Lösung dieser Aufgabe vorgeschlagene Halter zur Kabeldurchführung ist dadurch gekennzeichnet, daß die Durchgangsöffnung des Haltekörpers im Anschluß an einen im wesentlichen zylindrischen Bereich einen sich konisch erweiternden Bereich aufweist, in welchen der Aufnahmekörper mit einem der Durchgangsöffnung angepaßten Außenmantel einsteckbar ist, wobei am Haltekörper an der Einsteckseite nach innen abstehende Rastnasen angeformt sind, welche den hinteren Randbereich des Aufnahmekörpers im eingesteckten Zustand hintergreifen.

Der so ausgebildete Halter bietet bei der Montage den Vorteil, daß zunächst der Haltekörper in der Aussparung der Trennwand verankert und dann das Kabel zusammen mit dem gummiartigen Aufnahmekörper in die Durchgangsöffnung des Haltekörpers eingesteckt und dort eingerastet werden kann. Dies ist insbesondere dann von Vorteil, wenn der Haltekörper mit einem zusätzlichen Dichtschirm zur Anlage auf eine schalldämpfende Isolierung der Trennwand gebracht werden soll, wie das bei den Trennwänden zum Motorraum hin heute allgemein üblich ist.

Um die abdichtende Wirkung zwischen Aufnahmekörper und Haltekörper noch effektiver zu gestalten, ist nach einem weiteren Merkmal der Erfindung vorgesehen, daß am Außenmantel des Aufnahmekörpers mehrere, an der Innenwand des Halteteils anliegende Dichtringe angeformt sind, wo diese zweckmäßigerweise entgegen der Einsteckrichtung abgeschrägt sind.

Der Aufnahmekörper kann sowohl als geschlossener Ring ausgebildet sein als auch - wie beim zugrundegelegten Stand der Technik - in Längsrichtung der Kabeldurchgangsöffnung einen radialen Schlitz zum seitlichen Einführen der Kabel aufweisen. Um auch im letztgenannten Fall die abdichtende Wirkung zu erhöhen, bzw. sicherzustellen, ist es in weiterer Ausgestaltung der Erfindung zweckmäßig, wenn der Radialschlitz in achsparalleler Richtung zickzackförmig verläuft, so daß die zusammengedrückten Trennflächen sich mehrfach fest berühren.

Ein Ausführungsbeispiel der Erfindung ist in der Zeichnung dargestellt und soll nachfolgend näher erläutert werden. Es zeigt
- Fig. 1: einen Aufnahmekörper im Längsschnitt gemäß Linie I - I in Figur 2,
- Fig. 2: eine Vorderansicht hierzu,
- Fig. 3: den zugehörigen Haltekörper, zum Teil in Seitenansicht und zum Teil im Längsschnitt gemäß Linie III - III in Figur 4,
- Fig. 4: eine Vorderansicht hierzu in Richtung "A",
- Fig. 5: den Aufnahmekörper mit eingelegtem Kabel beim Einführen in den bereits montierten Haltekörper und
- Fig. 6: den zusammengefügten Halter im Einbauzustand.

Der in den Figuren dargestellte Halter dient zur abgedichteten Durchführung von Kabeln, Schläuchen oder dergleichen Leitungen durch Trennwände zwischen verschiedenen Bereichen eines Kraftfahrzeugs, insbesondere zwischen Fahrerkabine bzw. Fahrgastraum und Motorraum. Mit der abgedichteten Durchführung der Kabel soll erreicht werden, daß weder Gase noch Geräusche aus dem Motorraum in den Fahrgastraum gelangen können.

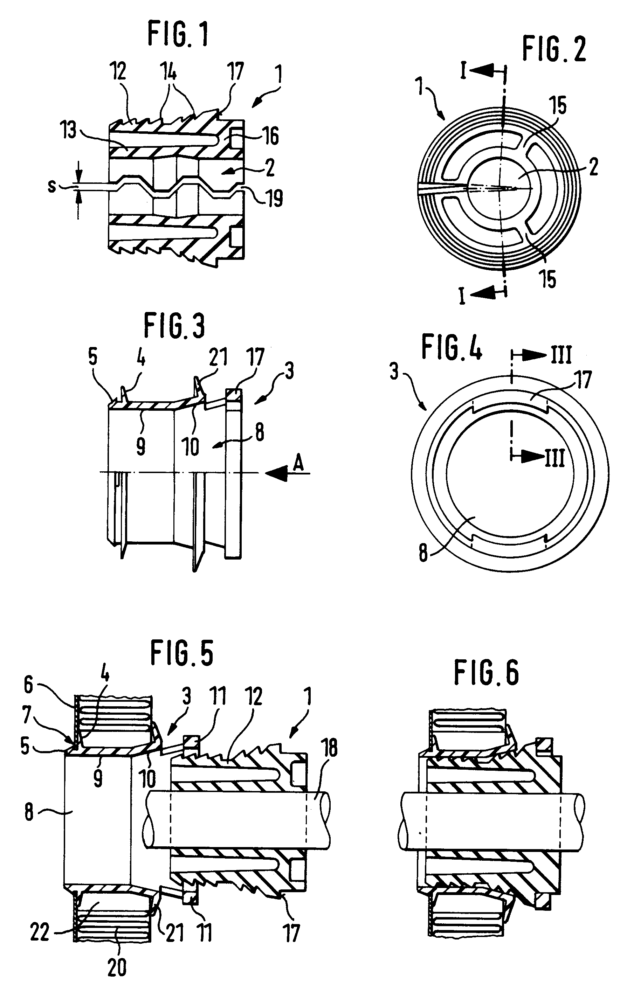

Der Halter besteht hierbei aus einem Aufnahmekörper 1 aus weichelastischem Material, wie beispielsweise Moosgummi, mit einer Kabeldurchgangsöffnung 2 (Fig. 1 und 2) und einem den Aufnahmekörper 1 dicht umschließenden, ringförmigen Haltekörper 3 aus hartelastischem Kunststoff (Fig. 3 und 4).

Der Haltekörper 3 besitzt an seinem Außenmantel in der Nähe des Randes einen umlaufenden Flansch oder Dichtschirm 4 und im Abstand davor mehrere, zum Rand konisch zusammenlaufende Rastnasen 5 zur Verankerung des Haltekörpers 3 in einer dem Außenmantel angepaßten Durchführungsöffnung der besagten Trennwand 6, wobei der Dichtschirm 4 auf der einen Seite der Trennwand 6 anliegt, während die Rastnasen 5 den Rand 7 der Durchführungsöffnung hintergreifen (Fig. 5).

Der Haltekörper 3 besitzt eine Durchgangsöffnung 8 zum Einstecken des Aufnahmekörpers 1. Diese Durchgangsöffnung 8 weist in ihrem vorderen, in der Trennwand 6 verankerbaren Teil einen im wesentlichen zylindrischen Bereich 9 auf, an den sich ein sich konisch erweiternder Bereich 10 anschließt. An der erweiterten Einsteckseite des Haltekörpers 3 sind außerdem nach innen abstehende Rastnasen 11 angeformt, welche dazu dienen, den eingesteckten Aufnahmekörper 1 festzuhalten.

Dieser Aufnahmekörper 1 besteht im vorliegenden Ausführungsbeispiel aus einem der Durchgangsöffnung 8 des Haltekörpers 3 angepaßten Außenmantel 12 und einem die Kabeldurchgangsöffnung 2 bildenden Innenmantel 13, wobei am Außenmantel 12 mehrere, an der Innenwand des Halteteils 3 anliegende Dichtringe 14 angeformt sind. Innenmantel 13 und Außenmantel 12 des Aufnahmekörpers 1 sind in Längsrichtung der Durchgangsöffnung 2 durch mehrere, radial verlaufende Stege 15 und am erweiterten Ende in Querrichtung durch eine ringförmige Wand 16 miteinander verbunden, so daß die Durchgangsöffnung 8 vom Aufnahmekörper 1 nach dem Eindrücken in den Haltekörper 3 völlig abgedichtet wird (Fig. 6). Die Dichtringe 14 sind hierbei zum leichteren Eindrücken des Aufnahmekörpers 1 entgegen der Einsteckrichtung abgeschrägt.

Kurz vor seinem erweiterten Ende besitzt der Aufnahmekörper 1 eine bundförmig abgesetzte Rastfläche 17, welche im eingesteckten Zustand des Aufnahmekörpers 1 an den Rastnasen 11 des Haltekörpers 3 einrastet, so daß der Aufnahmekörper 1 im Haltekörper 3 axial fixiert ist.

Zum leichteren Einbau eines Schlauches oder Kabels 18 ist der Aufnahmekörper 1 in Längsrichtung der Kabeldurchgangsöffnung 2 mit einem radialen Schlitz 19 versehen, welcher aus Gründen der besseren Dichtung in achsparalleler Richtung zickzackförmig verläuft. Die Spaltbreite "S" des Radialschlitzes 19 ist hierbei so bemessen, daß dieser im zusammengedrückten und eingebauten Zustand des Aufnahmekörpers 1 völlig verschwindet, d.h., daß die einandergegenüberliegenden Spaltwände fest aneinanderliegen.

Da die Trennwände 6 zum Motorraum üblicherweise mit einer schalldämpfenden Isolierschicht 20 versehen sind, ist der Haltekörper 3 noch mit einem Dichtschirm 21 versehen, wobei der Abstand zum ersten Dichtschirm 4 so bemessen ist, daß der zweite Dichtschirm 21 im montierten Zustand des Haltekörpers 3 geringfügig in die Isolierschicht 20 eintaucht. Auch ist der Dichtschirm 21 im Außendurchmesser größer als der Dichtschirm 4, damit die für den Dichtschirm 4 notwendige Aussparung 22 von dem zweiten Dichtschirm 21 voll abgedeckt wird.

## Patentansprüche

1. Halter zur abgedichteten Durchführung von Kabeln, Schläuchen oder dergleichen Leitungen durch Trennwände zwischen verschiedenen Bereichen eines Kraftfahrzeuges, bestehend aus einem das Kabel eng umschließenden Aufnahmekörper aus einem weichelastischen Material und einem in der Durchführungsöffnung der Trennwand mit Rastmitteln verankerbaren, den Aufnahmekörper dicht umschließenden, ringförmigen Haltekörper aus hartelastischem Kunststoff,
**dadurch gekennzeichnet,** daß die Durchgangsöffnung (8) des Haltekörpers (3) im Anschluß an einen im wesentlichen zylindrischen Bereich (9) einen sich konisch erweiternden Bereich (10) aufweist, in welchen der Aufnahmekörper (1) mit einem der Durchgangsöffnung (8) angepaßten Außenmantel (12) einsteckbar ist, wobei am Haltekörper (3) an der Einsteckseite nach innen abstehende Rastnasen (11) angeformt sind, welche den hinteren Randbereich (17) des Aufnahmekörpers (1) im eingesteckten Zustand hintergreifen.

2. Halter zur Kabeldurchführung nach Anspruch 1, dadurch gekennzeichnet, daß am Außenmantel (12) des Aufnahmekörpers (1) mehrere, an der Innenwand des Halteteils (3) anliegende Dichtringe (14) angeformt sind.

3. Halter zur Kabeldurchführung nach Anspruch 2, dadurch gekennzeichnet, daß die Dichtringe (14) entgegen der Einsteckrichtung abgeschrägt sind.

4. Halter zur Kabeldurchführung nach Anspruch 1 oder 2, wobei der Aufnahmekörper (1) in Längsrichtung der Kabeldurchgangsöffnung (2) einen radialen Schlitz (19) zum seitlichen Einführen des Kabels (18) aufweist, dadurch gekennzeichnet, daß der Radialschlitz (19) in achsparalleler Richtung zickzackförmig verläuft.

## Claims

1. Holder for the sealed feed-through of cables, hoses or similar leads through partitions between different areas of a motor vehicle, composed of a receiving member of soft elastic material which tightly encloses the cable, and an annular retaining member of hard elastic plastics material which can be anchored in the feed-through opening of the partition by locking means, and tightly encloses the receiving member, characterised in that the feed-through opening (8) of the retaining body (3) subsequently to a substantially cylindrical section (9) has a conically widening section (10), in which the receiving member (1) is insertable with an outer sheath (12) which corresponds with the feed-through opening (8), whereby on the retaining member (3) on the insertion side, there are formed inwardly protruding locking projections (11), which grasp behind the rear edge region (17) of the receiving member (1) in its inserted position.

2. Holder for cable feed-through according to claim 1, characterised in that on the outer sheath (12) of the receiving member (1) are formed a plurality of sealing rings (14) which lie against the inner wall of the retaining member (3).

3. Holder for cable feed-through according to claim 2, characterised in that the sealing rings (14) are tapered against the direction of insertion.

4. Holder according to claims 1 or 2, whereby the receiving member (1) is provided, longitudinally with respect to the cable feed-through opening, with a radial slot (19) for the lateral insertion of the cable (18), characterised in that the radial slot runs in a zig-zag shape parallel to the axis.

## Revendications

1. Support réalisant la traversée étanche de câbles, de flexibles ou de canalisations analogues au travers de cloisons assurant la séparation entre différents compartiments d'un véhicule automobile, se composant d'un logement de traversée enserrant étroitement le câble, réalisé dans une matière à cèdage élastique facile et d'un organe de retenue de forme annulaire en matière plastique à cèdage élastique dur emmanché étanche sur le logement et ancrable en position dans l'ouverture de passage ménagée dans la cloison au moyen d'éléments d'accrochage, **se caractérisant par le fait** que l'ouverture de passage (8) de l'organe de retenue (3) comporte à la suite d'une section de forme essentiellement cylindrique (9) une section qui va en s'évasant progressivement suivant un tracé conique (10), dans laquelle le logement de traversée (1), dont l'enveloppe extérieure (12) est adaptée à l'ouverture de passage (8), vient s'emmancher, l'organe de retenue (3) étant en l'occurrence muni d'ergots d'accrochage (11) formant saillie vers l'intérieur, et rendus solidaires par moulage de son côté d'introduction qui, lorsque cet organe est en position d'emmanchement, viennent cramponner par derrière le rebord arrière (17) du logement de traversée (1).

2. Support passe-cloison suivant la revendication 1, se caractérisant par le fait que l'enveloppe extérieure (12) du logement de traversée (1) est munie de plusieurs bagues d'étanchéité (14) formant partie intégrante de celui-ci par moulage, qui prennent appui contre la paroi intérieure de l'organe de retenue (3).

3. Support passe-cloison suivant la revendication 2, se caractérisant par le fait que les bagues d'étanchéité (14) présentent une conicité opposée au sens de l'emmanchement.

4. Support passe-cloison suivant la revendication 1 ou 2, se caractérisant par le fait que le logement de traversée (1) comporte, dans le sens longitudinal de l'ouverture de passage du câble (2), une fente radiale (19) pour l'introduction latérale du câble (18), se caractérisant par le fait que cette fente radiale (19) présente un tracé en zigzag dans le plan parallèle à l'axe.
